# EUROPÄISCHE PATENTSCHRIFT

(11) **EP 0 787 751 B1**
(45) Veröffentlichungstag und Bekanntmachung des Hinweises auf die Patenterteilung: **06.10.1999**
(21) Anmeldenummer: 97101241.4
(22) Anmeldetag: 28.01.1997
(51) Int. Cl.: C08G 18/08, C08G 18/10, C09J 175/04

(54) **Wässerige Polyurethandispersionen enthaltend Stuktureinheiten abgeleitet von Alkenyl- oder Alkylbernsteinsäure**
Aqueous polyurethane dispersions containing repeating units derived from alkenyl or alkyl substituted succinic acid
Dispersions aqueuses polyuréthane contenant des unités structurales derivées de l'acide succinique substitué par des groupes alcényl ou alkyle

(30) Priorität: 05.02.1996 DE 19603989
(43) Veröffentlichungstag der Anmeldung: 06.08.1997
(73) Patentinhaber: BASF AKTIENGESELLSCHAFT, 67056 Ludwigshafen (DE)
(72) Erfinder: Kokel, Nicolas, Dr., 67069 Ludwigshafen (DE); Häberle, Karl, Dr., 67346 Speyer (DE); Beutler, Kuno, 67245 Lambsheim (DE); Reichert, Jürgen, Dr., 7117 Limburgerhof (DE); Weyland, Peter, Dr., 67227 Frankenthal (DE); Dralle-Voss, Gabriele, Dr., 64665 Alsbach-Hähnlein (DE); Oppenländer, Knut, Dr., 67061 Ludwigshafen (DE); Zirnstein, Michael, Dr., 69198 Schiesheim (DE); Tischer, Gerlinde, 01945 Ruhland (DE); Guettes, Bernd, 03238 Sallgast (DE); Licht, Ulrike, Dr., 68163 Mannheim (DE)

(56) Entgegenhaltungen:
- EP-A- 0 647 667
- DE-A- 3 039 271

## Beschreibung

Die vorliegende Erfindung betrifft wässerige Dispersionen, enthaltend ein Polyurethan, aufgebaut aus
a) Diisocyanaten mit 4 bis 30 C-Atomen,
b) Diolen, von denen
   b1) 10 bis 100 mol-%, bezogen auf die Gesamtmenge der Diole (b), ein Molekulargewicht von 500 bis 5000 aufweisen, und aufgebaut sind aus
      b1.1) (C₄- bis C₃₀-Alkyl)-bernsteinsäure und/oder (C₄-bis C₃₀-Alkenyl)-bernsteinsäure,
      b1.2) 0 bis 60 mol-%, bezogen auf die Komponenten (b1.1), einer von der Komponente (b1.1) verschiedenen Dicarbonsäure und
      b1.3) einem Diol mit einem Molekulargewicht von 60 bis 500 g/mol,
   b.2) 0 bis 90 mol-%, bezogen auf die Gesamtmenge der Diole (b), ein Molekulargewicht von 60 bis 500 g/mol aufweisen und
   b.3) 0 bis 90 mol-%, bezogen auf die Gesamtmenge der Diole (b), ein Molekulargewicht von 500 bis 5000 g/mol aufweisen und verschieden von (b1) sind,
c) von den Monomeren (a) und (b) verschiedene Monomere mit wenigstens 2 Isocyanatgruppen oder wenigstens 2 gegenüber Isocyanatgruppen reaktiven Gruppen, die darüberhinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (c) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

Wässerige Polyurethandispersionen sind allgemein bekannt und beispielsweise in G. Oertel "Kunststoff Handbuch Band 7 - 2. Auflage" 1983, Hanser Verlag, München, Wien, Kapitel 2.4.1 beschrieben.

Diese Polyurethandispersionen werden als Beschichtungsmittel zur Beschichtung unterschiedlichster Substrate wie Leder, Holz, Metall, Kunststoffe, Papier oder Textilien eingesetzt, wobei die Eigenschaften der Dispersionen entsprechend der geplanten Verwendung der beschichteten Gegenstände und den Eigenschaften des jeweiligen Substrates abgestimmt sind.

Polyurethandispersionen, die als Beschichtungsmittel für Leder eingesetzt werden, sollen dem Leder folgende Eigenschaften verleihen
- eine geringe Neigung zum Kleben, beim Bügeln und Stapeln
- Unempfindlichkeit gegenüber Wasser und Feuchtigkeit
- hohe Dauer-Biegefestigkeit
- eine gute Reibfestigkeit und Scheuerfestigkeit und
- einen angenehmen ledertypischen "Griff".

Wässerige Polyurethandispersionen, die speziell als Beschichtungsmittel für Leder empfohlen werden, sind in der DE-A-26 45 779 beschrieben.

Die Polyurethane sind aufgebaut aus Dihydroxylverbindungen mit einem Molekulargewicht von 500 bis 5000, Diisocyanaten, wobei es sich um eine Kombination von aromatischen und aliphatischen oder cycloaliphatischen Diisocyanaten handelt, wobei der (cyclo)-aliphatische Anteil 10 bis 50 mol-% ausmacht, wasserlöslichen Salzen von aliphatischen Aminocarbon- oder -sulfonsäuren mit mindestens einem an Stickstoff gebundenen Wasserstoffatom und Verbindungen mit mindestens 2 gegenüber Isocyanatgruppen reaktiven Wasserstoffatomen.

Beim Aufbau des Polyurethans wird entweder zuerst der aromatische Anteil oder die aromatischen und nicht-aromatischen Isocyanate in Form ihrer Mischung eingesetzt. Mit diesen Dispersionen beschichtete Leder sind noch, was ihre Klebrigkeit sowie ihre Beständigkeit gegenüber Wasser oder Feuchtigkeit betrifft, verbesserungsfähig. Aus der EP-A-0 647 667 sind wässerige Dispersionen bekannt, die man erhält, indem man ein Isocyanat-terminiertes Urethan-Präpolymer mit einem Salz einer organischen Säure, die bezüglich Gruppen, die gegenüber Isocyanatgruppen reaktionsfähig sind, monofunktionell sind, partiell umsetzt und die verbliebenen Isocyanatgruppen mit einem Polyamin kettenverlängert. Als Aufbaukomponenten für das Urethan-Präpolymer wird eine umfangreiche Liste von Verbindungen empfohlen, wobei auch Polyesterpolyole erwähnt sind, die aus Alkyl- und Alkenylbernsteinsäuren aufgebaut sind. Wasserfreie Filme dieser Dispersionen sind klebrig und als Lederbeschichtungsmittel nicht brauchbar.

Die Aufgabe der vorliegenden Erfindung bestand deshalb darin, eine wässerige Polyurethandispersion bereitzustellen, die sich als Beschichtungsmittel für Leder eignet und den Ledern gute anwendungstechnische Gebrauchs- und Herstellungseigenschaften verleiht.

Demgemäß wurden die vorstehend definierten wässerigen Dispersionen gefunden.

Als Monomere (a) kommen die üblicherweise in der Polyurethanchemie eingesetzten Diisocyanate in Betracht.

Insbesondere zu nennen sind Diisocyanate X(NCO)₂, wobei X für einen aliphatischen Kohlenwasserstoffrest mit 4 bis 12 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, l-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methan sowie aus diesen Verbindungen bestehende Gemische.

Als Gemische dieser Isocyanate sind besonders die Mischungen der jeweiligen Strukturisomeren von Diisocyanatotoluol und Diisocyanato-diphenylmethan von Bedeutung, insbesondere ist die Mischung aus 80 mol-% 2,4 Diisocyanatotoluol und 20 mol-% 2,6-Diisocyanatotoluol geeignet. Weiterhin sind die Mischungen von aromatischen Isocyanaten wie 2,4 Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Als Diole (b1) werden 10 bis 100 bevorzugt 30 bis 100, besonders bevorzugt 50 bis 100 mol-%, bezogen auf die Gesamtmenge der Diole (b), Polyesterole eingesetzt, die ein Molekulargewicht von 500 bis 5000, bevorzugt 800 bis 3000 aufweisen, und aufgebaut sind aus
b1.1) (C₄- bis C₃₀-Alkyl)-bernsteinsäure und/oder (C₄- bis C₃₀-Alkenyl)-bernsteinsäure,
b1.2) 0 bis 60, bevorzugt 0 bis 30 mol-%, bezogen auf die Komponenten (b1.1), einer von der Komponente (b1.1) verschiedenen Dicarbonsäure und
b1.3) einem Diol mit einem Molekulargewicht von 60 bis 500 g/mol.

Bei den (C₄- bis C₃₀-Alkenyl)-bernsteinsäuren handelt es sich bevorzugt Verbindungen der Formel I 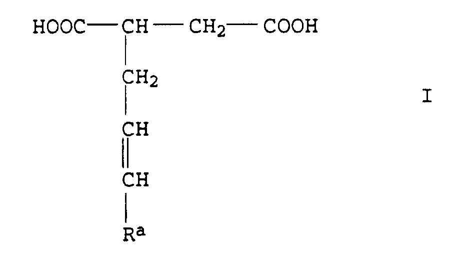 in der der Substituent R^{a} ein C₁- bis C₂₇-Alkylrest ist. Besonders bevorzugt ist R^{a} eine unverzweigter Rest mit 1 bis 27 C-Atomen.

Dabei handelt es sich um handelsübliche Verbindungen, die durch Umsetzung von α-Olefinen mit Maleinsäureanhydriden erhältlich sind. Die Herstellung ist beispielsweise in "Maleic Anhydride Derivates" von L. H. Flett & W. H. Gardner 1952, John Whiley & Sons Inc. sowie in den US-Patenten 2561231, 2561791, 2573495 und 2496358 beschrieben.

Die bevorzugten (C₄- bis C₃₀-Alkyl)-bernsteinsäuren sind die, die durch Hydrierung der Doppelbindung aus den (C₄- bis C₃₀-Alkenyl)-bernsteinsäuren erhältlich sind.

Bei den Dicarbonsäuren (b1.2) handelt es sich um diejenigen, die bei der Polyesterherstellung (vgl. Ullmanns Encyklopädie der technischen Chemie, 4. Auflage, Band 19, S. 62 bis 65 ) allgemein üblich sind. Sie können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Bei den Diolen (b1.3) handelt es sich ebenfalls um die, die bei der Herstellung von Polyestern allgemein eingesetzt werden. Es handelt sich dabei beispielsweise um Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole. Bevorzugt sind Alkohole der allgemeinen Formel HO-(CH₂)ₓ-OH, wobei x eine Zahl von 1 bis 20 ist. Beispiele hierfür sind Ethylenglycol, Butan-1,4-diol, Hexan-1,6-diol, Octan-1,8-diol und Dodecan-1,12- diol sowie aus diesen Verbindungen bestehende Gemische.

Die Härte und der Elastizitätsmodul der Polyurethane läßt sich erhöhen, wenn als Diole (b) neben den Diolen (b1) noch niedermolekulare Diole (b2) mit einem Molekulargewicht von etwa 62 bis 500, vorzugsweise von 62 bis 200 g/mol, eingesetzt werden.

Als Diole (b2) kommen die gleichen in Betracht, die als Diole (b1.3) eingesetzt werden können.

Bei den Diolen (b3) handelt es sich insbesondere um Polyesterpolyole, die z.B. aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Bevorzugt sind hier diejenigen, die als Dicarbonsäuren (b1.2) in Betracht kommen. Als Diolkomponente zum Aufbau dieser Polyester (b3) kommen ebenfalls die als Diole (b1.3) aufgeführten Diole in Betracht.

Ferner kommen als Diole (b3) auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist. Beispiele sind ε-Caprolacton, β-Propiolacton, gamma-Butyrolacton und/oder Methyl-E-caprolacton sowie deren Gemische.

Daneben kommen als Komponenten (b3) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF3 oder durch Anlagerung dieser Verbindungen gegebenenfalls im Gemisch oder nacheinander, an Startkomponenten mit reaktionsfähigen Wasserstoffatomen, wie Alkohole oder Amine, z.B. Wasser, Ethylenglykol, Propan-1,2-diol, Propan-1,3-diol, 1,2-Bis(4-hydroxydiphenyl)-propan oder Anilin erhältlich. Besonders bevorzugt ist Polytetrahydrofuran eines Molekulargewichts von 240 bis 5000, und vor allem 500 bis 4500.

Dispersionen mit besonders guten anwendungstechnischen Eigenschaften erhält man insbesondere, wenn man den Anteil der Komponente (b1) und den Anteil der Komponente (b1.1) in der Komponente (b1) so wählt, daß das Strukturelement, das sich von der Komponente (b1.1) durch Abstraktion der beiden Säureprotonen ableitet, mindestens 10 %, bevorzugt 20 bis 60 % Gew.-%, bezogen auf die Gew.-menge aller Komponenten (b), ausmacht.

Um die Wasserdispergierbarkeit der Polyurethane zu erreichen, sind die Polyurethane neben den Komponenten (a), (b), (d) und (e) aus von den Komponenten (a), (b) und (d) verschiedenen Monomeren (c), die wenigstens zwei Isocyanatgruppen oder wenigstens zwei gegenüber Isocyanatgruppen reaktive Gruppen und darüberhinaus wenigstens eine hydrophile Gruppe oder eine Gruppe, die sich in hydrophile Gruppen überführen läßt, tragen, aufgebaut. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer, als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c) und (d) wird im allgemeinen so bemessen, daß die Molmenge der (potentiell) hydrophilen Gruppen, bezogen auf die Gewichtsmenge aller Monomere (a) bis (d), 30 bis 1000, bevorzugt 50 bis 600 und besonders bevorzugt 80 bis 400 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 15, bevorzugt 0 bis 10 Gew.-%, bezogen auf die Gewichtsmenge aller Monomere (a) bis (d).

Bevorzugte Monomere mit nichtionischen hydrophilen Gruppen sind die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US 3 905 929 und US 3 920 598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder tertiäre Aminogruppen.

(Potentiell) ionische Monomere (c) sind z.B. in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyldialkylamine, wobei die Alkylreste und Alkandiyl-Einheiten dieser tertiären Amine unabhängig voneinander aus 2 bis 6 Kohlenstoffatomen bestehen.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁- bis C₆-Alkylhalogeniden, z.B. Bromiden oder Chloriden in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-A 3 412 054 beschrieben sind. Insbesondere sind Verbindungen der allgemeinen Formel 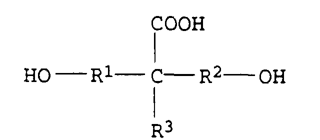 in welcher R¹ und R² für eine C₁- bis C₄-Alkandiyl-Einheit und R³ für eine C₁- bis C₄-Alkyl-Einheit steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind.

Als Monomere (c) mit gegenüber Isocyanaten reaktiven Aminogruppen kommen Aminocarbonsäuren wie Lysin, β-Alanin, die in der DE-A2034479 genannten Addukte von aliphatischen diprimären Diaminen an α,β-ungesättigte Carbonsäuren wie die N-(2-Aminoethyl)-2-aminoethancarbonsäure sowie die entsprechenden N-Aminoalkyl-aminoalkylcarbonsäuren, wobei die Alkandiyl-Einheiten aus 2 bis 6 Kohlenstoffatome bestehen, in Betracht.

Sofern Monomere mit potentiell ionischen Gruppen eingesetzt werden, kann deren Überführung in die ionische Form vor, während, jedoch vorzugsweise nach der Isocyanat-Polyaddition erfolgen, da sich die ionischen Monomeren in der Reaktionsmischung häufig nur schwer lösen. Besonders bevorzugt liegen die Carboxylatgruppen in Form ihrer Salze mit einem Alkaliion oder einem Ammoniumion als Gegenion vor.

Die Monomere (d), die von den Monomeren (a) bis (c) verschieden sind, dienen im allgemeinen der Vernetzung oder der Kettenverlängerung. Es sind im allgemeinen mehr als zweiwertige nichtaromatische Alkohole, Amine mit 2 oder mehr primären und/oder sekundären Aminogruppen sowie Verbindungen, die neben einer oder mehreren alkoholischen Hyxdroxylgruppen eine oder mehrere primäre und/oder sekundären Aminogruppen tragen.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, daß man Präpolymere mit Isocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei primäre, zwei sekundäre oder eine primäre und eine sekundäre Aminogruppe enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe z.B. CA-1 129 128), Ketazine (vgl. z.B. die US-A 4 269 748) oder Aminsalze (s. US-A 4 292 226) eingesetzt werden.

Bevorzugt werden Gemische von Di- und Triaminen verwendet, besonders bevorzugt Gemische von Isophorondiamin und Diethylentriamin.

Die Polyurethane enthalten bevorzugt kein Polyamin oder 1 bis 10, besonders bevorzugt 4 bis 8 mol-%, bezogen auf die Gesamtmenge der Komponenten (b) und (d) eines Polyamins mit mindestens 2 gegenüber Isocyanaten reaktiven Aminogruppen als Monomere (d).

Alkohole mit einer höheren Wertigkeit als 2, die zur Einstellung eines gewissen Verzweigungs- oder Vernetzungsgrades dienen können, sind z.B. Trimethylolpropan, Glycerin oder Zucker.

Für den gleichen Zweck können auch als Monomere (d) dreiwertige und vierwertige Isocyante eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und Mono- primäre und sekundäre Amine. Im allgemeinen beträgt ihr Anteil maximal 8 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Auf dem Gebiet der Polyurethanchemie ist allgemein bekannt, wie das Molekulargewicht der Polyurethane durch Wahl der Anteile der miteinander reaktiven Monomere sowie dem arithmetischen Mittel der Zahl der reaktiven funktionellen Gruppen pro Molekül eingestellt werden kann.

Normalerweise werden die Komponenten (a), (b), (c) und (d) sowie ihre jeweiligen Molmengen so gewählt, daß das Verhältnis A : B mit
A) der Molmenge an Isocyanatgruppen und
B) der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionellen Gruppen, die mit Isocyanaten in einer Additionsreaktion reagieren können.

Die Polyaddition der Komponenten (a) bis (e) erfolgt im allgemeinen nach den bekannten Verfahren, wobei bevorzugt das sog. "Acetonverfahren" oder das Präpolymermischverfahren", die beispielsweise aus der DE-A-4418157 bekannt sind, angewendet wird.

Dabei geht man im allgemeinen so vor, daß man zunächst in einem inerten organische Lösungsmittel ein Präpolymer oder das Polyurethan herstellt und anschließend das Präpolymer oder das Polyurethan in Wasser dispergiert. Im Falle des Präpolymeren erfolgt die Umsetzung zum Polyurethan durch Reaktion mit dem Wasser oder durch ein nachträglich zugegebenes Amin (Komponente d). Üblicherweise wird das Lösungsmittel nach der Dispergierung destillativ ganz oder teilweise entfernt.

Die Dispersionen haben im allgemeinen einen Feststoffgehalt von 10 bis 75, bevorzugt von 20 bis 65 Gew.-% und eine Viskosität von 10 bis 500 m Pas (gemessen bei einer Temperatur von 20°C und einer Schergeschwindigkeit von 250 s⁻¹).

Hydrophobe Hilfsmittel, die unter Umständen nur schwierig homogen in der fertigen Dispersion zu verteilen sind wie beispielsweise Phenol-Kondensationharze aus Aldehyden und Phenol bzw. Phenolderivaten oder Epoxidharze und weitere z.B. in der DE-A3903538, 43 09 079 und 40 24 567 genannten Polymere, die in Polyurethandispersionen beispielsweise als Haftungsverbesserer dienen, können nach den in den beiden oben genannten Schriften beschriebenen Methoden dem Polyurethan oder dem Präpolymeren bereits vor der Dispergierung zugesetzt werden.

Die erfindungsgemäßen Dispersionen können für sich oder als Mischung mit anderen, gleichsinnig geladenen Dispersionen von Homo- oder Copolymeren von z.B. Acryl- oder Methacrylsäureestern, Styrol oder Butadien verwendet werden.

Die erfindungsgemäßen wässerigen Polyurethandispersionen eignen sich in vorteilhafter Weise als Beschichtungsmittel für die unterschiedlichsten Substrate, z.B. Leder, Papier, Textilien Kunststoff oder Metall. Sie können mit üblichen Methoden, z.B. durch Spritzen, Rakeln oder Gießen auf die Substrate aufgetragen werden.

Weiterhin eigenen sich die Dispersionen zum Verkleben unterschiedlichster Substrate. Hierzu werden die Dispersionen auf eine oder beide miteinander zu verklebenden Flächen aufgetragen und die Flächen vor oder nach dem Trocknen der Dispersion vorzugsweise unter Anwendung von Druck in Kontakt gebracht.

### Herstellungsbeispiele:

A. Herstellung der Komponente (b1.1a)
Eine Mischung von 108,0 kg eines a-C12/14-Olefin-Gemisches (ca. 2:1) 1,63 kg Fumarsäure und 0,82 kg Hydrochinonmonomethylether wurde unter Rühren in Stickstoffatmosphäre auf 160°C erwärmt. Eine Schmelze von 54,5 kg Maleinsäureanhydrid wurde hinzudosiert und die Reaktionsmischung auf 200°C erwärmt und 8 Stunden bei dieser Temperatur gehalten. Anschließend wurde nicht umgesetztes Olefin bei 100°C im Vakuum abdestilliert und das Rohprodukt mittels Dünnschichtverdampfer gereinigt.
Produkt: braune Flüssigkeit;
Anhydridzahl: 199 mg KOH/g.
B. Herstellung der Komponente (b1.a)
Aus 7,03 kg der Komponente (b1.1a) und 3,40 kg Hexan-1,6-diol wurde auch nach einer üblichen Methode (vgl. "Kunststoff Handbuch Band 7" Günter Oertel, 2. Auflage 1983, Hanser Verlag, München Wien; Kapitel 3.1.2. Seiten 57 bis 62) das entsprechende Polyesterdiol (Polyesterdiol b1.a) hergestellt. Es wies eine Hydroxylzahl von 56 auf.
C) Herstellung der Dispersionen

| Abkürzungen | |
|---|---|
| TMXDI | Tetramethylenxylylendiisocyanat |
| EDA | Ethylendiamin |
| IPDI | Isophorondiisocyanat |
| HMDI | Dicyclohexylmethandiisocyanat |
| IPDA | Isophorondiamin |
| DETA | Diethylentriamin |
| DMPA | Dimethylolpropionsäure |

### Beispiel 1

Zu 400 g (0,200 mol) des Polyesterols (b1.a) wurde ein Gemisch aus 62,3 g (0,28 mol)IPDI und 74,0 g (0,28 mol) HMDI) gegeben und 70 min bei 70°C gerührt. Danach wurden 18,0 g (0,2 mol) Butandiol-1,4 zugefügt und weitere 90 min bei 70°C umgesetzt. Dann wurde mit 520 g Aceton verdünnt und bei 50°C mit 37,8 g einer 40 %igen wäßrigen Lösung des Adduktes von Ethylendiamin an Natriumacrylat umgesetzt. Anschließend wurde mit 1000 g Wasser dispergiert und nach 15 min wurde eine Lösung von 1,7 g (0,01 mol) IPDA und 3,8 g (0,037 mol) DETA zugegeben. Danach wurde das Aceton im Vakuum abgezogen.

Man erhielt eine feinteilige Dispersion mit 36,0 % Feststoffgehalt.

### Vergleichsbeispiel 1 (V1)

Zu 400 g (0,200 mol) eines Polyesterols der OH-Zahl 56 aus Adipinsäure, Hexandiol und Neopentylglykol wird ein Gemisch aus 62,3 g (0,28 mol) IPDI und 74,0 g (0,28 mol) HMDI gegeben und 70 min bei 70°C gerührt. Danach wurden 18,0 g (0,2 mol) Butandiol-1,4 zugesetzt und weitere 90 min bei 70°C umgesetzt. Dann wurde mit 520 g Aceton verdünnt und bei 50°C mit 37,8 g einer 40 %igen wäßrigen Lösung des Adduktes von Ethylendiamin an Natriumacrylat umgesetzt. Anschließend wurde mit 1000 g Wasser dispergiert. Danach wurde das Aceton im Vakuum abgezogen.

Man erhielt eine feinteilige Dispersion mit 35,0 % Feststoffgehalt.

### Beispiel 2

Zu einem Gemisch aus 400 g (0,2 mol) des Polyesterols aus Beispiel 1, 36,0 g (0,269 mol) DMPA und 0,25 g DBTL wurden 126,0 g (0,567 mol) IPDI gegeben und 180 min lang bei 100°C gerührt. Das entstandene Prepolymer wurde in 600 g Aceton gelöst und dabei auf 30°C abgekühlt. Dann wurden zuerst 25,9 g (0,256 mol) TEA und dann 1100 g Wasser eingerührt. Unmittelbar danach wurden 6,9 g (0,067 mol) DETA in 400 g Wasser eingerührt. Danach wurde das Aceton im Vakuum abgezogen.

Man erhielt eine feinteilige Dispersion mit 28,4 % Feststoffgehalt.

### Vergleichsbeispiel 2 (V2)

Zu einem Gemisch aus 400 g (0,2 mol) des Polyesterols aus Vergleichsbeispiel 1, 36,0 g (0,269 mol) DMPA und 0,25 g DBTL wurden 126,0 g (0,567 mol) IPDI gegeben und 180 min lang bei 100°C gerührt. Das entstandene Prepolymer wurde in 600 g Aceton gelöst und dabei auf 30°C abgekühlt. Dann wurden zuerst 25,9 g (0,256 mol) TEA und dann 1100 g Wasser eingerührt. Unmittelbar danach wurden 6,9 g (0,067 mol) DETA in 400 g Wasser eingerührt. Danach wurde das Aceton im Vakuum abgezogen.

Man erhielt eine feinteilige Dispersion mit 28,4 % Feststoffgehalt.

### Vergleichsbeispiel 3 (entspricht weitgehend Beispiel 1 aus EP-A-647 667) (V3)

281,6 g (0,141 mol) des Polyesterols (b1.a) und 17,6 g (0,169 mol) Neopentylglykol wurden bei 130°C zusammen vorgelegt. Zu dieser Schmelze wurden 30,9 g (0,177 mol) TDI und 14,5 g (0,059 mol) TMXDI zudosiert und bis zu einem NCO-Gehalt von 0 % gerührt. Nach Abkühlen auf 70°C wurden 15,7 g (0,133 mol) Hexandiol zugegeben und nachdem es gelöst war, noch einmal 69,8 g (0,286 mol) TMXDI zudosiert. Bei einem NCO-Wert von 1,8 % wurden 68,5 g (0,116 mol) einer 25 %igen wäßrigen Lösung von Na-Taurinat eingerührt. Nach 10 min wurde eine Lösung von 2,4 g (0,040 mol) EDA in 124 g Wasser zugegeben und unter steigender Temperatur bis 85°C eingerührt. Nach ca. 30 min wurde mit 323,3 g Wasser auf den Endfeststoffgehalt verdünnt.

### Anwendungstechnische Prüfung

Die Dispersionen gemäß den Beispielen 1, Vergleich 1, 2, Vergleich 3 wurden in analoger Weise als Grundierbinder verarbeitet.

Hierzu wurde eine Mischung, bestehend aus
- 100 g: einer handelsüblichen Pigmentpräparation
- 335 bzw. 420 g: Dispersion gemäß Beispiel 1, V1 bzw. Beispiel 2, V2 (die unterschiedlichen Mengen richten sich nach dem Feststoffgehalt der Dispersionen; ergeben 120 g Polymer-Feststoff) und
- 665 bzw. 580 g: Wasser
auf Rindboxleder aufgetragen.

Die Auftragsmenge betrug insgesamt 40 g Trockenmasse/m². Die Auftragung erfolgte durch zweimaligen Spritzauftrag, wobei das Leder nach jedem Spritzauftrag bei 80°C getrocknet und anschließend auf einer hydraulischen Kugelpresse bei 80°C und 50 bar gebügelt wurde.

Die Prüfergebnisse der Leder sind in Tabelle 1 zusammengestellt.

Die Prüfung der Dauerbiegefestigkeit wurde nach DIN 53 351/IUP 20 (Methode der physikalischen Lederprüfung von der Internationalen Union der Lederchemiker-Verbände) mit dem Bally-Flexometer durchgeführt:

**Tabelle 1**

| Dispersion | Flex.¹⁾ tr/naß | Kälteflex² ) -10°C | Flex. n. ³⁾^{*} Lagerung | Stapelkleben⁴⁾ |
|---|---|---|---|---|
| Beisp. 1 | 0/0 | 0 | 0 | 2-3 |
| Vergl. 1 | 0/0 | 0 | s | 1 |
| Beisp. 2 | 0/0 | 0 | 0 | 4 |
| Vergl. 2 | 0/0 | 0 | d | 2 |
| Vergl. 3 | nicht brauchbar* | | | |

| | | | | |
|---|---|---|---|---|
| * klebt stark | | | | |
| 1) Flexometerprüfung trocken nach 50 000 bzw. naß nach 20 000 Knickungen | | | | |
| 2) Kälteflex bei -10°C nach 30 000 Knickungen | | | | |
| 3) Flexometerprüfung nach Lagerung des zugerichteten Leders während 7 Tagen bei 80°C und 95 % relativer Luftfeuchte mit folgender Prüfung nach 50 000 Knickungen. Noten Flexometer: 0 keine, g geringe, d deutliche, s starke Beschädigung, | | | | |
| 4) Zur Prüfung des Stapelklebens wurden die zugerichteten (beschichteten) Seiten zweier Lederflächen 60 x 75 mm aufeinandergelegt und 10 Stunden bei 40°C mit 5 kg Belastung gelagert. Nach Abkühlung wurde das Klebeverhalten kein Trennen der Lederflächen beurteilt. Beurteilung 1-5. 1 total verklebt, sehr stark verletzte Oberfläche 2 deutlich verklebt und verletzt 3 leichtes Kleben, gering verletzt 4 gering haftend, ohne Verletzung 5 keine Haftung, Flächen fallen auseinander | | | | |

## Patentansprüche

1. Wässerige Dispersionen, enthaltend ein Polyurethan, aufgebaut aus
a) Diisocyanaten mit 4 bis 30 C-Atomen,
b) Diolen, von denen
b.1)10 bis 100 mol-%, bezogen auf die Gesamtmenge der Diole (b), ein Molekulargewicht von 500 bis 5000 aufweisen, und aufgebaut sind aus
b1.1) (C₄- bis C₃₀-Alkyl)-bernsteinsäure und/oder (C₄- bis C₃₀-Alkenyl)-bernsteinsäure,
b1.2) 0 bis 60 mol-%, bezogen auf die Komponenten (b1.1), einer von der Komponente (b1.1) verschiedenen Dicarbonsäure
b1.3) einem Diol mit einem Molekulargewicht von 60 bis 500 g/mol
b.2) 0 bis 90 mol-%, bezogen auf die Gesamtmenge der Diole (b), ein Molekulargewicht von 60 bis 500 g/mol aufweisen,
b.3) 0 bis 90 mol-%, bezogen auf die Gesamtmenge der Diole (b), ein Molekulargewicht von 500 bis 5000 g/mol aufweisen und verschieden von (b1) sind,
c) von den Monomeren (a) und (b) verschiedenen Monomeren mit wenigstens 2 Isocyanatgruppen oder wenigstens 2 gegenüber Isocyanatgruppen reaktiven Gruppen, die darüberhinaus wenigstens eine hydrophile Gruppen oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (c) verschiedenen einwertigen Verbindungen mit einer reaktiven Gruppen, bei der es sich um eine alkoholische Hydroxylgruppe, eine primäre oder sekundäre Aminogruppen oder eine Isocyanatgruppe handelt.

2. Wässerige Dispersionen nach Anspruch 1, wobei es sich bei der Komponente (b1.1) um eine Verbindung der Formel I 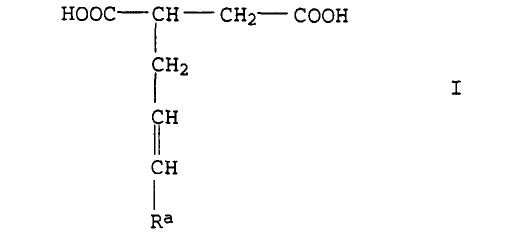 handelt, in der der Substituent R^{a} ein C₁- bis C₂₇-Alkylrest ist.

3. Verwendung der Dispersionen nach Anspruch 1 oder 2 als Beschichtungsmittel oder Klebstoff für Leder, Papier, Textilien Kunststoffe oder Metalle.

4. Gegenstände aus Leder, Papier, Textilien Kunststoff oder Metall, die mit einer wässerigen Dispersion nach Anspruch 1 oder 2 beschichtet oder verklebt sind.

## Claims

1. An aqueous dispersion containing a polyurethane built up from
a) diisocyanates having 4 to 30 carbon atoms,
b) diols, of which
b.1)from 10 to 100 mol%, based on the total amount of the diols (b), have a molecular weight of from 500 to 5000 and are built up from
b1.1) (C₄- to C₃₀-alkyl)succinic acid and/or (C₄- to C₃₀-alkenyl)succinic acid,
b1.2) from 0 to 60 mol%, based on component (b1.1), of a dicarboxylic acid which is different from component (b1.1), and
b1.3) a diol having a molecular weight of from 60 to 500 g/mol,
b.2)from 0 to 90 mol%, based on the total amount of the diols (b), have a molecular weight of from 60 to 500 g/mol, and
b.3)from 0 to 90 mol%, based on the total amount of the diols (b), have a molecular weight of from 500 to 5000 g/mol and are different from (b1),
c) monomers which are different from the monomers (a) and (b) and contain at least 2 isocyanate groups or at least 2 isocyanate-reactive groups and which in addition carry at least one hydrophilic group or a potentially hydrophilic group, thus achieving the water-dispersibility of polyurethanes,
d) if desired, further polyfunctional compounds which are different from the monomers (a) to (c) and contain reactive groups which are alcoholic hydroxyl groups, primary or secondary amino groups or isocyanate groups, and
e) if desired, monofunctional compounds which are different from the monomers (a) to (c) and contain one reactive group, which is an alcoholic hydroxyl group, a primary or secondary amino group or an isocyanate group.

2. An aqueous dispersion as claimed in claim 1, where component (b1.1) is a compound of the formula I 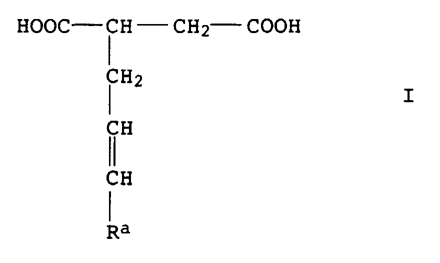 where R^{a} is C₁-C₂₇-alkyl.

3. The use of the dispersion as claimed in claim 1 or 2 as a coating composition or adhesive for leather, paper, textiles, plastics or metals.

4. An article made from leather, paper, textiles, plastic or metal which is coated or bonded by means of an aqueous dispersion as claimed in claim 1 or 2.

## Revendications

1. Dispersions aqueuses, contenant un polyuréthane, formé à partir de
a) des diisocyanates ayant de 4 à 30 atomes de C,
b) des diols, parmi lesquels
b.1) 10 à 100% en moles, par rapport à la quantité totale des diols (b), présentent un poids moléculaire de 500-5000, et sont formés à partir
b1.1) d'acide (alkyle en C₄-C₃₀)succinique et/ou d'acide (alcényle en C₄-C₃₀)succinique,
b1.2) 0-60% en moles, par rapport aux composants (b1.1), d'un acide dicarboxylique différents des composants (b1.1),
b1.3) un diol ayant un poids moléculaire de 60-500 g/mol,
b.2) 0-90% en moles, par rapport à la quantité totale des diols (b), présentent un poids moléculaire de 60-500 g/mol,
b.3) 0-90% en moles, par rapport à la quantité totale des diols (b), présentent un poids moléculaire de 500-5000 g/mol, et sont différents de (b1),
c) de monomères différents des monomères (a) et (b) ayant au moins deux groupements isocyanate ou au moins deux groupements réactifs vis-à-vis des groupements isocyanate, qui portent en outre au moins un groupement hydrophile ou potentiellement hydrophile, permettant ainsi de rendre active la dispersabilité dans l'eau du polyuréthane,
d) éventuellement d'autres monomères polyfonctionnels différents des monomères (a) à (c), dont les groupements réactifs sont des groupements alcooliques hydroxyle, des groupements amino primaires ou secondaires ou des groupements isocyanate et
e) éventuellement d'autres monomères monofonctionnels différents des monomères (a) à (c), dont le groupement réactif est un groupement alcoolique hydroxyle, un groupement amino primaire ou secondaire ou un groupement isocyanate.

2. Dispersions aqueuses selon la revendication 1, pour lesquelles le composant (b1.1) est un composé de formule I 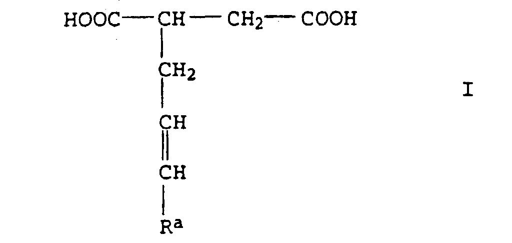 dans laquelle le substituant R^{a} est un reste alkyle en C₁-C₂₇.

3. Utilisation des dispersions selon la revendication 1 ou 2, en tant qu'agent d'enduction ou adhésif pour le cuir, le papier, les matières textiles, les matières plastiques ou les métaux.

4. Objets en cuir, papier, matières textiles, matières plastiques ou métal qui sont enduits ou collés avec une dispersion aqueuse selon la revendication 1 ou 2.
